(19)

Europäisches Patentamt

European Patent Office

Office européen des brevets

(11) **EP 3 242 236 B1**

(12) **EUROPEAN PATENT SPECIFICATION**

(45) Date of publication and mention
of the grant of the patent:
**14.10.2020  Bulletin 2020/42**

(21) Application number: **15875141.2**

(22) Date of filing: **22.12.2015**

(51) Int Cl.:
*G06F 21/00* (2013.01)          *G06Q 30/06* (2012.01)
*G06F 21/31* (2013.01)          *G06F 21/55* (2013.01)

(86) International application number:
**PCT/CN2015/098256**

(87) International publication number:
**WO 2016/107463 (07.07.2016 Gazette 2016/27)**

(54) **TRANSACTION RISK DETECTION METHOD AND DEVICE**

VERFAHREN UND VORRICHTUNG ZUR ERKENNUNG VON TRANSAKTIONSRISIKEN

PROCÉDÉ ET DISPOSITIF DE DÉTECTION DE RISQUE DE TRANSACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2014  CN 201410843822**

(43) Date of publication of application:
**08.11.2017  Bulletin 2017/45**

(73) Proprietor: **Alibaba Group Holding Limited
Grand Cayman (KY)**

(72) Inventors:
• **CHEN, Lujia
Hangzhou
Zhejiang 311121 (CN)**
• **GUO, Liang
Hangzhou
Zhejiang 311121 (CN)**

(74) Representative: **Barker Brettell LLP
Medina Chambers
Town Quay
Southampton SO14 2AQ (GB)**

(56) References cited:
WO-A1-2014/160296          CN-A- 102 194 177
CN-A- 102 509 223          CN-A- 103 530 772
GB-A- 2 512 340            JP-A- 2003 196 566
US-A1- 2003 158 815        US-A1- 2013 110 715
US-A1- 2013 218 765        US-A1- 2014 180 974
US-A1- 2014 258 118        US-A1- 2014 278 879
US-B1- 8 666 829

## Description

### Technical Field

The present invention relates to the field of information security technologies, and in particular, to a transaction risk detection method and apparatus.

### Background

With the popularization of network payment, payment risk prevention and control for network accounts has become increasingly important. At present, payment risks of accounts mainly include an account-theft risk and a card-theft risk. A general feature of the account-theft risk is that, after acquiring a login password and a payment password of an account in an illegal manner, a thief transfers balances in the account and a deposit in a card to another account or to another card for disposal.

At the present stage, for this kind of risk, a prevention and control end mainly uses transaction event information (amount, time, category) and environment information (city, device) to find an abnormal point (such as an abnormal high amount, or a new city), to take necessary prevention and control measures on a transaction having a potential risk. However, this prevention and control method may cause certain misjudgment. For example, when a transfer is performed at an unusual site, or a large amount of funds transfer is performed for the first time between a couple of married persons who never transfer money to each other, this may be considered as a high-risk transaction by the risk prevention and control end, and a transfer request is rejected directly, causing risk misjudgment. Technological background for the disclosed solution can be found in US2013/218765 and US2013/110715.

### Summary

The invention is set out in the appended set of claims.
The present invention aims to solve one of the technical problems in the related art at least to some extent.
Therefore, an objective of the present invention is to provide a transaction risk detection method, and the method improves the accuracy of transaction risk detection.
Another objective of the present invention is to provide a transaction risk detection apparatus.
To achieve the above objective, the transaction risk detection method provided by an embodiment of the present invention includes: determining a current transaction account, and acquiring a historical transaction track of the current transaction account, the historical transaction track being determined according to LBS data of the current transaction account; acquiring, according to the historical transaction track of the current transaction account, feature information of the current transaction account; and performing risk management and control according to the feature information.
The transaction risk detection method proposed in the embodiment of the present invention determines a risk score according to the feature information, the feature information is determined according to the historical transaction track, and the historical transaction track is determined according to the LBS data, thus implementing application of position information to the risk management and control, and improving the accuracy of transaction risk detection.
To achieve the above objective, the transaction risk detection apparatus provided by an embodiment of the present invention includes: a transaction module configured to determine a current transaction account, and acquire a historical transaction track of the current transaction account, the historical transaction track being determined according to LBS data of the current transaction account; an acquisition module configured to acquire, according to the historical transaction track of the current transaction account, feature information of the current transaction account; and a management and control module configured to perform risk management and control according to the feature information.
The transaction risk detection apparatus proposed in the embodiment of the present invention determines a risk score according to the feature information, the feature information is determined according to the historical transaction track, and the historical transaction track is determined according to the LBS data, thus implementing application of position information to the risk management and control, and improving the accuracy of transaction risk detection.
Some of the additional aspects and advantages of the present invention will be provided in the following descriptions, some will become apparent from the following descriptions, or will be known through practice of the present invention.

### Brief Description of the Drawings

The above and/or additional aspects and advantages of the present invention will become obvious and easy to understand from the following description of the embodiments with reference to the accompanying drawings, wherein:

FIG. 1 is a schematic flowchart of a transaction risk detection method according to an embodiment of the present invention;

FIG. 2 is a schematic diagram of a historical transaction track obtained according to position information according to an embodiment of the present invention;

FIG. 3 is a schematic diagram of calculating a track angle in track reconstruction according to an embodiment of the present invention;

FIG. 4 is a schematic diagram of a system structure corresponding to a transaction risk detection method according to an embodiment of the present invention;

FIG. 5 is a schematic flowchart of a transaction risk detection method according to another embodiment of the present invention;

FIG. 6 is a schematic diagram of calculating a spatial distance of a track segment according to another embodiment of the present invention;

FIG. 7 is a schematic diagram of extracting a feature track according to another embodiment of the present invention;

FIG. 8 is a schematic flowchart of a transaction risk detection method according to another embodiment of the present invention;

FIG. 9 is a schematic structural diagram of a transaction risk detection apparatus according to another embodiment of the present invention;

FIG. 10 is a schematic structural diagram of a transaction risk detection apparatus according to another embodiment of the present invention; and

FIG. 11 is a schematic structural diagram of a transaction risk detection apparatus according to another embodiment of the present invention.

## Detailed Description

Embodiments of the present invention will be described in detail in the following. Also, examples of the embodiments are shown in the accompanying drawings, where identical or similar reference numerals represent identical or similar elements or elements having identical or similar functions throughout the text. The embodiments described in the following with reference to the accompanying drawings are exemplary and merely used to explain the present invention, and should not be construed as limiting the present invention. On the contrary, the embodiments of the present invention include all variations, modifications, and equivalents falling in the scope and connotation of the appended claims.

A transaction risk detection method and apparatus according to the embodiments of the present invention are described in the following with reference to the accompanying drawings.

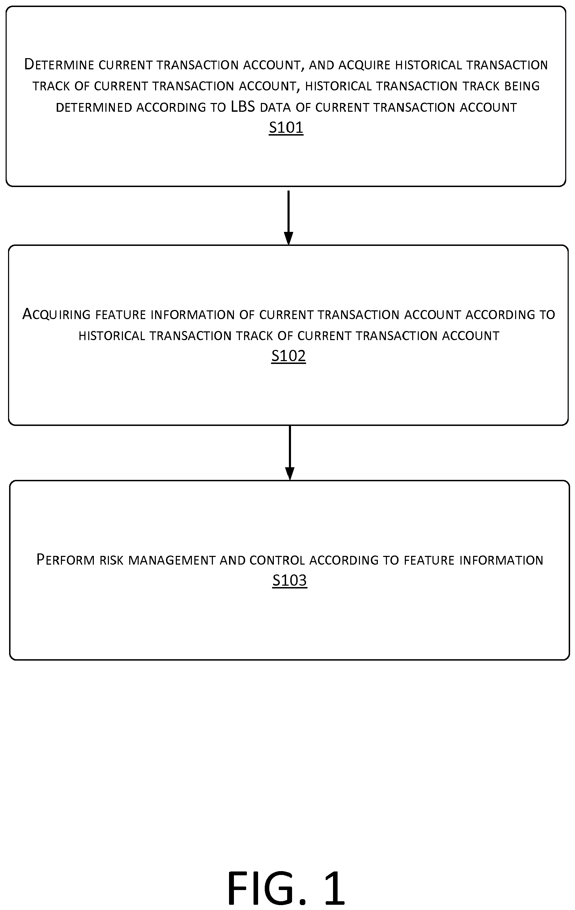

FIG. 1 is a schematic flowchart of a transaction risk detection method according to an embodiment of the present invention, the method including:

S101, determining a current transaction account, and acquiring a historical transaction track of the current transaction account, the historical transaction track being determined according to LBS data of the current transaction account.

Specifically, an account of a current transaction may be detected to obtain the current transaction account.

The current transaction account may be a single account; or, the current transaction account may be at least two accounts, for example, transfer from one account to another account.

More specifically, LBS (Location Based Service) data of the account may be collected in advance, the LBS data including position information. Wherein, the LBS data may include an IP (Internet Protocol) address, a WifiMac (local area network physical, an identifier for recognizing a terminal in a local area network) address, GPS (Global Positioning System) information, base station information, and the like.

Then, the historical transaction track of the account may be obtained according to the position information. For example, position information obtained at different time points is used to form the historical transaction track.

Feature points are extracted from the historical transaction track, and a reconstructed track of the account is obtained according to the feature points. For example, the historical transaction track is reconstructed and divided according to application scenarios and requirements, and the track is mined and analyzed by using various data mining methods.

Wherein, the feature point refers to a point, among end points of the historical transaction track, that meets a preset condition.

The point meeting the preset condition includes, for example: a stay point, and a point embodying a characteristic change of the historical transaction track.

The stay point refers to a point successively appearing at least twice at the same position in the historical transaction track. For example, after statistics on historical information, a position point corresponding to a moment T1 is P1, and a position point corresponding to a moment T2 adjacent to T1 is also PI; then, a point corresponding to P1 is referred to as a stay point.

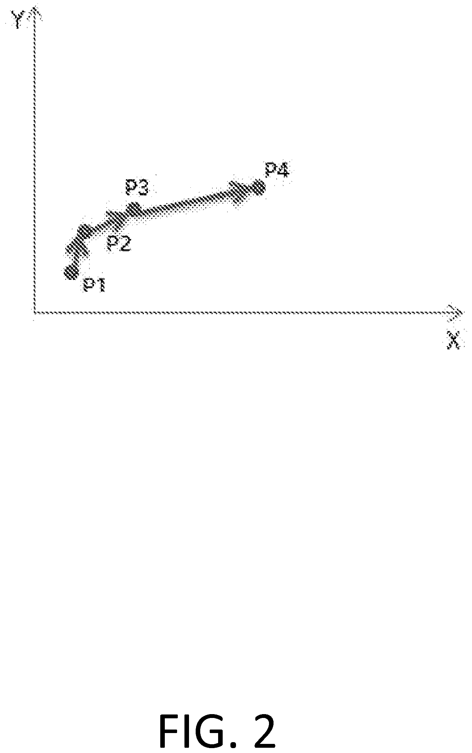

The point embodying a characteristic change of the historical transaction track is, for example, a point embodying a position direction change of the historical transaction track, and specifically, the point may be represented by an angle between track segments included in the historical transaction track. For example, the historical transaction track includes a track segment formed by P1-P2, and a track segment formed by P2-P3. If an angle between the track segment formed by P1-P2 and the track segment formed by P2-P3 is greater than a preset angle, P2 may be determined as a point embodying a characteristic change of the historical transaction track. Specifically, as shown in FIG. 2, it may be obtained according to the position information that the historical transaction track is line segments formed by track points P1, P2, P3 and P4. Wherein, the x axis and the y axis in the coordinate system in FIG. 2 respectively represent position coordinates of each track point, and specifically, may refer to longitude or dimension respectively, or may represent a two-dimensional spatial distance, wherein the spatial distance may be obtained according to a longitude difference and a dimension difference between two points.

A member A appears at points P1, P2, P3 and P4 respectively in chronological order. For example, the points such as P1 and P2 are a point corresponding to the home of the member A, a point corresponding to the office, a point corresponding to a supermarket, and the like, and track segments thereof are formed by tracks P1-P2, P2-P3 and P3-P4. Due to an overhigh LBS data collection frequency, the data may contain excessive redundant information, for example, the tracks P2-P3 and P3-P4 in FIG. 2. Therefore, feature points may be extracted from the historical transaction track, and the transaction track of the account may be reconstructed according to the feature points. For example, the tracks P2-P3 and P3-P4 are reconstructed to obtain a new track segment P2-P4, thus improving the running efficiency of subsequent track data mining with a slight loss of track precision.

Optionally, the extracting feature points from the historical transaction track includes:

acquiring a point embodying a characteristic change of the historical transaction track, and a stay point; and determining the point embodying a characteristic change of the historical transaction track and the stay point as the feature points, wherein, the stay point is a point successively appearing at least twice at the same position.

Wherein, the point embodying a characteristic change of the historical transaction track may be determined by an angle between track segments included in the historical transaction track.

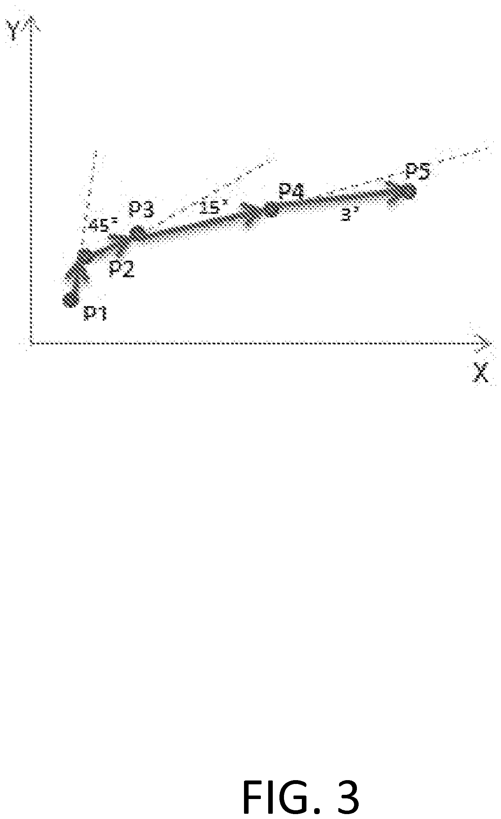

For example, referring to FIG. 3, the key to track reconstruction is finding a point that embodies a characteristic change of the track, that is, the feature point, from the historical transaction track. A selection rule of the feature point may be set by an analyzer. In this embodiment, an angle between track segments is used to indicate the characteristic change of the historical transaction track. Further, when an angle between track segments is determined, for example, when an angle between a second track segment and a first track segment is determined, an accumulated angle may be employed. The accumulated angle refers to that angles between adjacent track segments between the first track segment and the second track segment are accumulated, and a point of which the accumulated angle is greater than a threshold is a feature point. Suppose that 25° is used as a threshold; in FIG. 3, an account A appears at P1, P2, P3, P4 and P5 respectively in chronological order, and track segments thereof include P1-P2, P2-P3, P3-P4 and P4-P5. An angle between the track segments P1-P2 and P2-P3 is equal to 45°, which is greater than the set threshold, and therefore, P2 is a feature point. For P3, as an angle between P2-P3 and P3-P4 is 15°, which is less than the threshold, and therefore, P3 is not a feature point. For P4, as P3 is not a feature point, an accumulated angle between P4-P5 and P2-P3 rather than an angle between P3-P4 and P4-P5 is calculated during angle measurement. The accumulated angle is 15°+3°=18°, which does not reach the set threshold, and therefore, P4 is not a feature point either. During track reconstruction, by using the feature point P2, the track is divided into two new track segments: P1-P2, P2-P5.

It should be noted that, in the process of track reconstruction, the feature points may include a stay point, and the stay point may not be involved in the calculation of the track angle, to reduce the amount of computation. The stay point is a point successively appearing at least twice at the same position. For example, in FIG. 3, it is assumed that the point P4 is a stay point, and then, an accumulated angle corresponding to P4 will not be calculated as described above; instead, P4 is directly determined as a feature point. As P2 is also determined as a feature point through the above angle calculation, the track after reconstruction becomes P1-P2, P2-P4, P4-P4 (a stay track), and P4-P5. The stay point, as a special feature point, is key to information reflected in the track. For example, tracks of two accounts in Table 1 have opposite track directions according to the method illustrated in the figure; however, the two have a common stay point (X, Y), and therefore, as known from the stay point, the member A and the member B are related.

Table 1

| Member A | | Member B | |
|---|---|---|---|
| Time | Site | Time | Site |
| 2014/8/1 21:00 | (X, Y) | 2014/8/1 21:00 | (X, Y) |
| 2014/8/2 8:00 | (X, Y) | 2014/8/2 8:00 | (X, Y) |

(continued)

| Member A | | Member B | |
|---|---|---|---|
| Time | Site | Time | Site |
| 2014/8/2 12:00 | (X+2 km, Y+1 km) | 2014/8/2 14:00 | (X-2 km, Y-2 km) |

S102, acquiring feature information of the current transaction account according to the historical transaction track of the current transaction account.

Optionally, after a reconstructed track is obtained corresponding to each account, the method may further include:

determining track segments included in the reconstructed track, and clustering the track segments to obtain at least one clustered category;
extracting a feature track from each category of the at least one category, to obtain a feature track set including at least one feature track; and
saving a corresponding relationship between each account and the feature track set.

If the current transaction account is a single account, after the corresponding relationship between each account and the feature track set is obtained, a feature track set corresponding to the current transaction account may be determined according to the corresponding relationship, and the feature track set is determined as the feature information of the current transaction account; or,
optionally, if the current transaction account includes at least two accounts, after the reconstructed track is obtained, the method may further include: acquiring, from the historical transaction track, reconstructed tracks respectively corresponding to the at least two accounts; calculating a temporal-spatial distance between the reconstructed tracks respectively corresponding to the at least two accounts; and
then, determining the temporal-spatial distance as the feature information, or, determining a similarity degree value between the at least two accounts according to the temporal-spatial distance, and determining the similarity degree value as the feature information. Wherein, the similarity degree value between the accounts may be represented by an inverse of the temporal-spatial distance.

S103: performing risk management and control according to the feature information.

For example, a risk score of the current transaction account is determined according to the feature information.

Specifically, if the current transaction account is a single account, the feature information may be a feature track set corresponding to the current transaction account, and the method may further acquire a current transaction track, and determine a risk score of the current transaction account by comparing the current transaction track with the feature track set served as the feature information.

If the current transaction account includes at least two accounts, that is, a transaction involves at least two parties, such as a transaction of transfer to an account of Alipay™, or a mobile phone recharge service of Alipay™ (the mobile phone has a bound Alipay™ account), at this point, the feature information is a temporal-spatial distance between reconstructed tracks respectively corresponding to the at least two accounts, or, a similarity degree value between the at least two accounts, and then, a risk score of the current transaction account is determined according to the temporal-spatial distance or the similarity degree value. Wherein, two parties in the transaction of the mobile phone recharge service of Alipay™ respectively refer to an Alipay™ account of a recharging party, and an Alipay™ account of a recharged party. Optionally, after the risk score is acquired, the risk score of the current transaction account may be output.

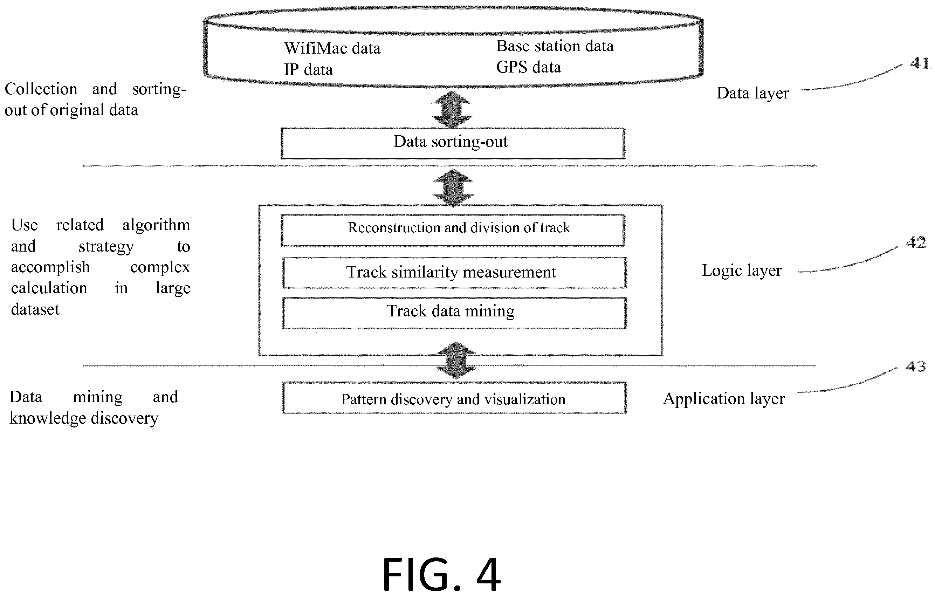

For example, referring to FIG. 4, a system structure corresponding to the method may include: a data layer 41, a logic layer 42, and an application layer 43.

As shown in FIG. 4, the output may specifically refer to a visual output. For example, when the risk score is greater than a first threshold, the risk score is marked in red; when the risk score is between the first threshold and a second threshold, the risk score is marked in yellow; and when the risk score is lower than the second threshold, the risk score is marked in green. It should be understood that the output manner is merely an example, the number of divided intervals is not limited to the above three intervals, and the division manner may also not be limited to the above manner.

In addition, after the risk score is obtained, risk management and control may be performed according to the risk score. For example, a transaction having a risk score higher than a preset threshold is determined as a high-risk transaction, and then, the high-risk transaction may be rejected.

This embodiment determines a risk score according to the feature information, the feature information being determined according to the historical transaction track, and the historical transaction track being determined according to the LBS data, thus implementing application of position information to the risk management and control, and improving the accuracy of transaction risk detection.

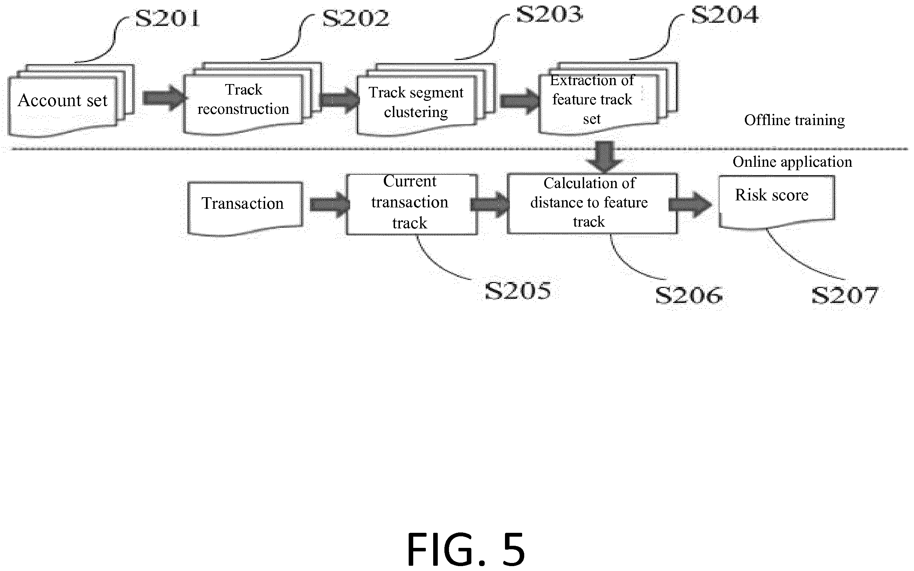

FIG. 5 is a schematic flowchart of a transaction risk detection method according to another embodiment of the present invention. In this embodiment, the current transaction account being a single account is used as an example for illustration, and the method is divided into an offline training stage and an online application stage. The offline running stage aims to train, for a member having transactions recently, a feature track set by using a historical track of the member, to find a track set that may represent typical application tracks of the member. In the online application stage, during real-time judgment of whether a transaction has a risk, a trained feature track set of the account is retrieved, and the minimum distance between a track of the current transaction and the feature track set is calculated. A smaller distance represents a lower risk of the current transaction, and vice versa.

As shown in FIG. 5, the method includes:

S201, acquiring an account set.

For each account, LBS data of the account is collected. The LBS data includes position information.

Wherein, the LBS data may include an IP (Internet Protocol) address, a WifiMac (local area network physical, an identifier for recognizing a terminal in the local area network) address, GPS (Global Positioning System) information, base station information, and the like.

Then, a historical transaction track of the account is obtained according to the position information, to form an account set.

Specifically, acquired position information may be associated in chronological order, to obtain a historical transaction track of a corresponding account. The acquired position information may also be sorted first, for example, LBS data of different formats is unified and sorted out to eliminate unrecognizable data, obvious error data, and the like, and the historical transaction track of the account is obtained according to the sorted position information.

S202, reconstructing a track.

Feature points are extracted from the historical transaction track, and a reconstructed track of the account is obtained according to the feature points.

For the specific process of track reconstruction, reference may be made to the above embodiment, which is not repeated herein.

S203, clustering track segments.

Specifically, track segments included in the reconstructed track may be determined, and the track segments are clustered to obtain at least one clustered category.

Specifically, first, a vertical distance, a parallel distance, and an angular distance between every two track segments may be calculated, and a final distance is obtained according to the vertical distance, the parallel distance, and the angular distance. Generally, assuming that a track of an account A has N feature points after reconstruction, then the account A has N-1 track segments. To cluster the N-1 track segments to find a feature track segment set, distances, including a vertical distance, a parallel distance and an angular distance, between every two track segments may be calculated.

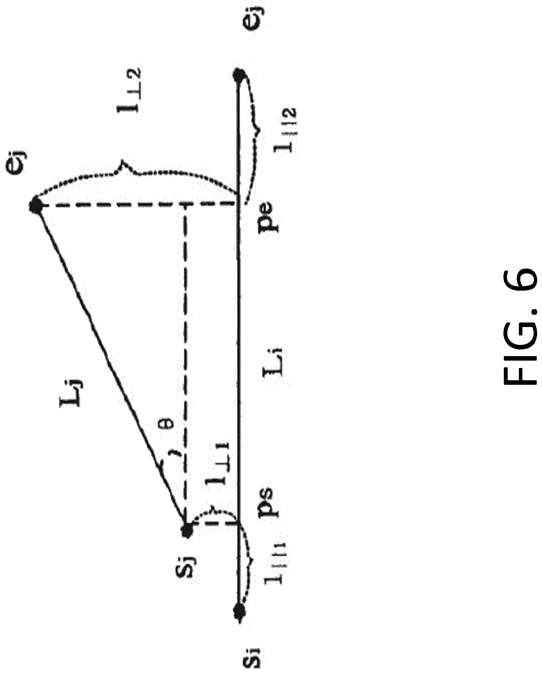

As shown in FIG. 6, Ps and Pe are projection points of a line segment $L_j$ on a line segment $L_i$. The final distance between the line segments may be obtained by weighting the vertical distance, the parallel distance and the angular distance, and weight values may be set by an analyzer, and may also be preset as 1. Moreover, a stay track segment is used as a special line segment, and a distance thereof is a point-to-line distance in the space, which may be obtained geometrically.

After the final distance between track segments is obtained, the N-1 track segments may be clustered according to the final distance. The clustering may be implemented by a commonly used clustering algorithm.

S204, extracting a feature track set.

Specifically, a feature track is extracted from each category of the at least one category, to obtain a feature track set including at least one feature track. For instance, assuming that after track clustering, the N-1 track segments of the account A are clustered into M categories, then, a feature track may be extracted from each category, and therefore, M feature tracks in total form a feature track set representing M typical historical application tracks of the account A. The significance of extracting the feature track is the timeliness of online application: first, for each account, only feature tracks thereof need to be stored, while all scattered tracks are ignored, which greatly saves the storage space; secondly, finite feature tracks are stored for each account, thus greatly improving performance of online real-time calling and calculation.

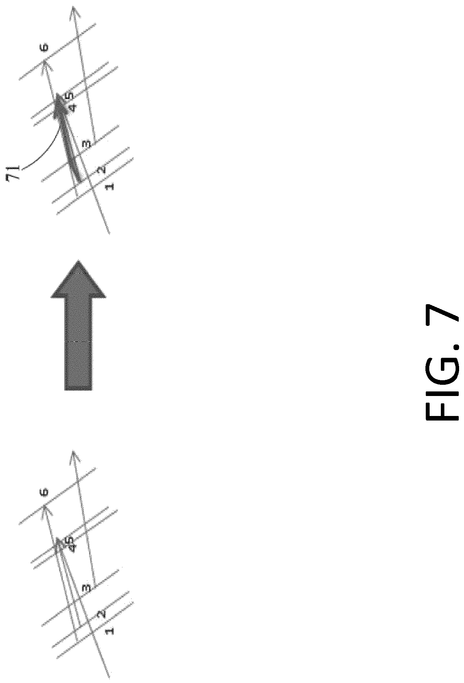

In an embodiment of the present invention, by line-sweeping track segments included in each category, a feature track may be extracted from the corresponding category. Wherein, the feature track is a virtual point sequence p1p2...pn, and these points may be determined by line-sweeping. Specifically, when a line sweeps vertically along a main axis direction of a line segment cluster, the number of line segments contacting the sweeping line is counted, and the data only changes when the sweeping line goes through a start or end point of a line segment. If the number is greater than or equal to a preset threshold (the threshold is, for example, 3), an average coordinate of line segments related to the main axis is calculated, and the average value is interpolated in the feature track to become a point in the feature track. Otherwise, the current point is skipped, for example, point 1 and point 6 in FIG. 7 are skipped. In addition, to smoothen the feature track, if two points are too close to each other, the two points may also be directly skipped, for example, point 4 in FIG. 7 is skipped. A red part 71 in FIG. 7 is an extracted feature track.

After the feature track set is obtained, a corresponding relationship between each account and the feature track set may be saved.

Specifically, a database may be established, and the feature track set of each account is updated in real time and saved corresponding to each account.

The track mining process may be accomplished offline.

S205, acquiring, when a transaction is detected, a current transaction track of a current transaction account.

For example, when the account A initiates a transaction, it may be determined that the current transaction account is the account A.

The acquiring a current transaction track may specifically include:

acquiring LBS data of a current transaction and LBS data of a previous transaction of the current transaction account, and acquiring, according to the LBS data, position information of the current transaction and position information of the previous transaction; and

determining, according to the position information of the current transaction and the position information of the previous transaction, the current transaction track of the current transaction account.

S206, calculating a distance between the current transaction track and a feature track set corresponding to the account.

A pre-trained feature track set including M feature tracks of the account A may be acquired according to a pre-saved corresponding relationship between accounts and feature track sets.

After the current transaction track and the feature track set are obtained, a spatial distance between the current transaction track and each feature track in the feature track set is calculated, and the minimum spatial distance is determined as a distance value between the current transaction track and the feature track set.

S207, determining a risk score.

For example, a risk score of the current transaction account is determined according to the distance value.

Specifically, the distance value may be determined as the risk score of the current transaction account. For example, the risk score may be the calculated minimum distance, or an inverse (a value thereof being 0 to 1) of the minimum distance.

Or, a threshold range to which the distance value belongs is determined, a risk score corresponding to the threshold range to which the distance value belongs is determined according to a preset corresponding relationship between threshold ranges and risk scores, and the risk score is determined as the risk score of the current transaction account. For example, the corresponding relationship may be shown as the following formula:

$$
\text{Current transaction risk score} = \begin{cases} 1 & \text{The minimum distance from the current transaction track to the feature track set} \geq 40 \text{ km} \\ 0.5 & \text{The minimum distance from the current transaction track to the feature track set} \in (3 \text{ km}, 40 \text{ km}) \\ 0 & \text{The minimum distance from the current transaction track to the feature track set} \leq 3 \text{km} \end{cases}
$$

It should be understood that the risk score may be used as a direct standard of risk measurement, and may also be used as a value-added variable of any risk model, to improve the prediction accuracy of the common risk model.

This embodiment acquires, by collecting LBS data of a transaction account, a historical transaction track and a current transaction track of the account, reconstructs and clusters the historical transaction track to obtain a feature track set corresponding to the account, and then determines a risk score of a current transaction by calculating a spatial distance between the current transaction track and each feature track, thus implementing application of position information to risk management and control, and improving the accuracy of transaction risk detection. In addition, the historical transaction track is reconstructed and clustered, and redundant information is removed, thus saving the storage space, and effectively improving the data processing efficiency.

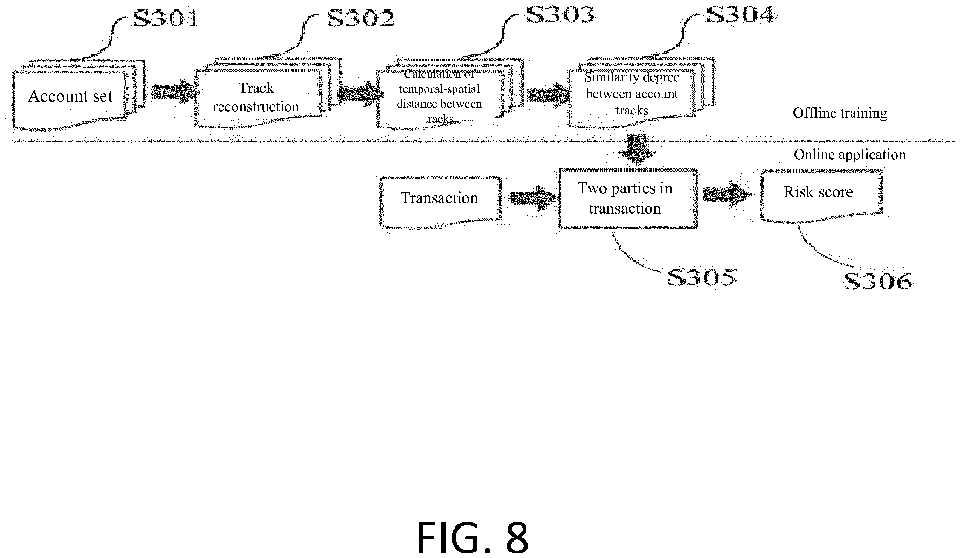

FIG. 8 is a schematic flowchart of a transaction risk detection method according to another embodiment of the present invention. This embodiment uses the current transaction account including at least two accounts as an example for illustration. The method is merely applicable to a transaction involving at least two accounts, for example, a transaction of transfer to an account of Alipay™, or a mobile phone recharge service of Alipay™ (the mobile phone is bound to an Alipay™ account). The method is divided into an offline training stage and an online application stage. In the offline training stage, a track relationship score between accounts is obtained by calculating a temporal-spatial distance between a historical track of one account and a historical track of another account. The higher the similarity degree between the historical tracks of the two account is, the higher the relationship score is. In the online application stage, during real-time judgment of whether a transaction involving two parties or multiple parties has a risk, a relationship score of accounts involved in the transaction is retrieved, and upon analysis, a higher score indicates a lower risk of the current transaction, and vice versa.

As shown in FIG. 8, the transaction risk detection method includes:

S301, acquiring an account set.
S302, reconstructing tracks.

For the specific process of S301 to S302, reference may be made to S201 to S202, and details are not repeated herein.

S303, calculating a temporal-spatial distance between tracks. For example, in the reconstructed tracks, a temporal-spatial distance between every two tracks is calculated.

Wherein, tracks after reconstruction include reconstructed tracks respectively corresponding to the at least two accounts. Specifically, for a transaction involving at least two accounts, such as the transaction of transfer to an account of Alipay™, or the mobile phone recharge service of Alipay™ (the mobile phone is bound to an Alipay™ account), reconstructed tracks respectively corresponding to at least two accounts may be acquired, and a temporal-spatial distance between the reconstructed tracks respectively corresponding to the at least two accounts involved in the transaction is calculated.

The temporal-spatial distance is generally calculated using the following three methods:

The first method is calculating a temporal distance and a spatial distance respectively, multiplying the temporal distance and the spatial distance by a certain weight, and then adding them to obtain the temporal-spatial distance.
The second method is filtering tracks by using time similarity, and then calculating a spatial distance between the tracks.
The third method is filtering tracks by using space similarity, and then calculating a temporal distance between the tracks.

The specific calculation method of the temporal-spatial distance may be implemented by using a commonly used temporal-spatial distance calculation algorithm.

It is understandable that, this embodiment uses calculating a temporal-spatial distance between every two tracks in the reconstructed tracks as an example, and optionally, after two accounts of the current transaction are determined, reconstructed tracks corresponding to the two accounts are acquired, and then a temporal-spatial distance between the reconstructed tracks corresponding to the two accounts is calculated.

S304, calculating a track similarity degree between accounts.

In an embodiment of the present application, a similarity degree value between at least two accounts may be an inverse of the temporal-spatial distance between the reconstructed tracks respectively corresponding to the at least two accounts, and the value is in a range of (0-1).

S305, after a transaction is detected, determining two transaction parties of the current transaction account.

In this embodiment, a transaction between two accounts is used as an example.

For example, transfer from an account A to an account B is performed.

S306, determining a risk score.

For example, a similarity degree value between the account A and the account B is acquired, and a risk score is calculated according to the similarity degree value.

It is understandable that, this embodiment uses calculating the similarity degree value as an example, and optionally, it is also possible that only the temporal-spatial distance is calculated, while the similarity degree value is not calculated, and the risk score is determined directly according to the temporal-spatial distance.

Specifically, the temporal-spatial distance or the similarity degree value may be determined as the risk score of the current transaction account; or

a threshold range to which the temporal-spatial distance or the similarity degree value belongs is determined, a risk score corresponding to the threshold range to which the temporal-spatial distance or the similarity degree value belongs is determined according to a preset corresponding relationship between threshold ranges and risk scores, and the risk score is determined as the risk score of the current transaction account. For example, the corresponding relationship may be shown as the following formula:

$$\text{Current transaction risk score} = \begin{cases} 1 & \text{The similarity degree between account tracks} < 0.2 \\ 0.5 & \text{The similarity degree between account tracks} \in [0.2, 0.8) \\ 0 & \text{The similarity degree between account tracks} \geq 0.8 \end{cases}$$

It should be understood that the risk score may be used as a direct standard of risk measurement, and may also be used as a value-added variable of any risk model, to improve the prediction accuracy of the common risk model.

This embodiment acquires a historical transaction track of an account by collecting LBS data of the account, reconstructs the historical transaction track, calculates, during transaction, a temporal-spatial distance between reconstructed tracks respectively corresponding to at least two accounts in the transaction, and then determines a risk score of the current transaction according to the temporal-spatial distance or a similarity degree value between the at least two accounts, thus implementing application of position information to risk management and control, and improving the accuracy of transaction risk detection. Meanwhile, a potential relationship between transaction accounts is mined according to feature information of accounts of two parties in the transaction, so that the probability of risk misjudgment is reduced.

To implement the above embodiment, the present invention further provides a transaction risk detection apparatus.

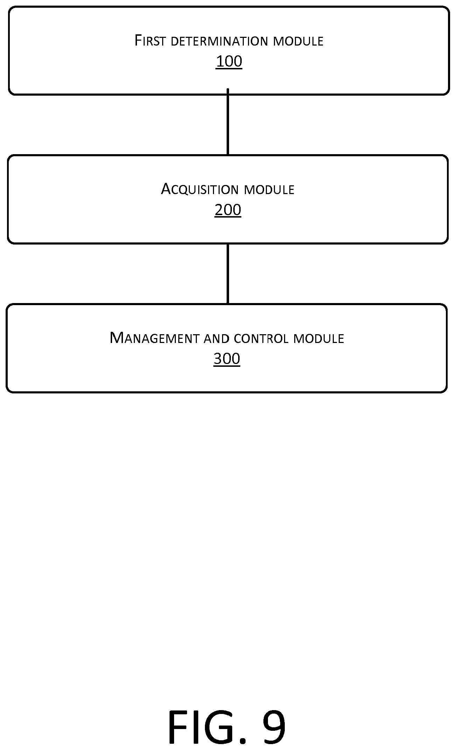

FIG. 9 is a schematic structural diagram of a transaction risk detection apparatus according to another embodiment of the present invention.

As shown in FIG. 9, the transaction risk detection apparatus includes: a first determination module 100, an acquisition module 200, and a management and control module 300.

Specifically, the first determination module 100 is configured to determine a current transaction account, and acquire a historical transaction track of the current transaction account, the historical transaction track being determined according to LBS data of the current transaction account. More specifically, the first determination module 100 may detect an account of a current transaction to obtain the current transaction account.

The current transaction account may be a single account; or, the current transaction account may be at least two accounts, for example, transfer from one account to another account.

More specifically, LBS (Location Based Service) data of the account may be collected in advance, the LBS data including position information. Wherein, the LBS data may include an IP (Internet Protocol) address, a WifiMac (local area network physical, an identifier for recognizing a terminal in a local area network) address, GPS (Global Positioning System) information, base station information, and the like. Then, a historical transaction track of the account may be obtained according to the position information. For example, position information obtained at different time points is used to form the historical transaction track.

The acquisition module 200 is configured to acquire feature information of the current transaction account according to the historical transaction track of the current transaction account. Optionally, after the reconstructed track is obtained corresponding to each account, track segments included in the reconstructed track may be determined, and the track segments are clustered to obtain at least one clustered category. A feature track is extracted from each category of the at least one category, to obtain a feature track set formed by at least one feature track. A corresponding relationship between each account and the feature track set is saved.

If the current transaction account is a single account, after the corresponding relationship between each account and the feature track set is obtained, a feature track set corresponding to the current transaction account is determined according to the corresponding relationship, and the feature track set is determined as the feature information of the current transaction account; or,

optionally, if the current transaction account includes at least two accounts, after the reconstructed track is obtained, reconstructed tracks respectively corresponding to the at least two accounts may further be acquired from the historical transaction track; a temporal-spatial distance between the reconstructed tracks respectively corresponding to the at least two accounts is calculated; then, the temporal-spatial distance is determined as the feature information, or, a similarity degree value between the at least two accounts is determined according to the temporal-spatial distance, and the similarity degree value is determined as the feature information. Wherein, the similarity degree value between the accounts may be represented by an inverse of the temporal-spatial distance.

The management and control module 300 is configured to perform risk management and control according to the feature information. For example, a risk score of the current transaction account is determined according to the feature information. More specifically, if the current transaction account is a single account, the feature information may be a feature track set corresponding to the current transaction account, and a second determination module 300 may acquire the current transaction track, and determine a risk score of the current transaction account by comparing the current transaction track with the feature track set served as the feature information.

If the current transaction account includes at least two accounts, that is, a transaction involves at least two parties, such as a transaction of transfer to an account of Alipay™, or a mobile phone recharge service of Alipay™ (the mobile phone has a bound Alipay™ account), at this point, the feature information is a temporal-spatial distance between reconstructed tracks respectively corresponding to the at least two accounts, or, a similarity degree value between the at least two accounts, and then, a risk score of the current transaction account is determined according to the temporal-spatial distance or the similarity degree value.

Optionally, after the risk score is acquired, the risk score of the current transaction account may be output. For example, referring to FIG. 4, a corresponding system structure may include: a data layer 41, a logic layer 42, and an application layer 43. As shown in FIG. 4, the output may specifically refer to a visual output. For example, when the risk score is greater than a first threshold, the risk score is marked in red; when the risk score is between the first threshold and a second threshold, the risk score is marked in yellow; and when the risk score is lower than the second threshold, the risk score is marked in green. It should be understood that the output manner is merely an example, the number of divided intervals is not limited to the above three intervals, and the division manner may also not be limited to the above manner.

In addition, after the risk score is obtained, risk management and control may be performed according to the risk score. For example, a transaction having a risk score higher than a preset threshold is determined as a high-risk transaction, and then, the high-risk transaction may be rejected.

This embodiment determines a risk score according to the feature information, the feature information being determined according to the historical transaction track, and the historical transaction track being determined according to the LBS data, thus implementing application of position information to the risk management and control, and improving the accuracy of transaction risk detection.

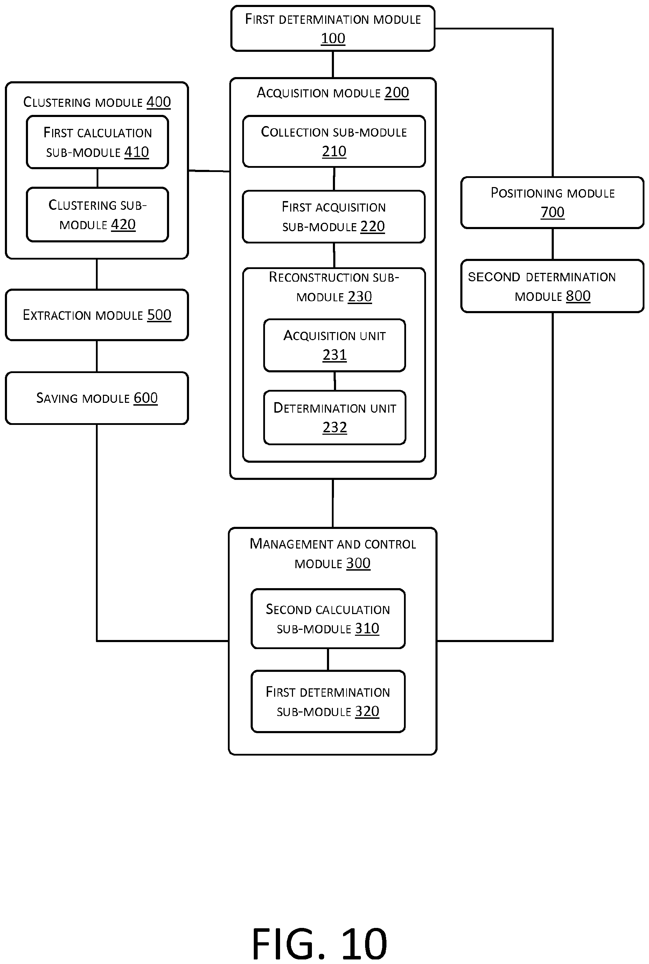

FIG. 10 is a schematic structural diagram of a transaction risk detection apparatus according to another embodiment of the present invention. In this embodiment, the current transaction account being a single account is used as an example for illustration, and the apparatus is divided into an offline training part and an online application part. The offline running part aims to train, for a member having transactions recently, a feature track set by using a historical track of the member, to find a track set that may represent typical application tracks of the member. In the online application part, during real-time judgment of whether a transaction has a risk, a trained feature track set of the account is retrieved, and the minimum distance between a track of the current transaction and the feature track set is calculated. A smaller distance represents a lower risk of the current transaction, and vice versa.

As shown in FIG. 10, the transaction risk detection apparatus includes: a first determination module 100, an acquisition module 200, a collection sub-module 210, a first acquisition sub-module 220, a reconstruction sub-module 230, an acquisition unit 231, a determination unit 232, a management and control module 300, a second calculation sub-module 310, a first determination sub-module 320, a clustering module 400, a first calculation sub-module 410, a clustering sub-module 420, an extraction module 500, a saving module 600, a positioning module 700, and a second determination module 800. Wherein: the acquisition module 200 includes: the collection sub-module 210, the first acquisition sub-module 220, and the reconstruction sub-module 230; the reconstruction sub-module 230 includes: the acquisition unit 231 and the determination unit 232; the management and control module 300 includes: the second calculation sub-module 310 and the first determination sub-module 320; and the clustering module 400 includes: the first calculation sub-module 410 and the clustering sub-module 420.

Specifically, for each account, the collection sub-module 210 collects LBS data of the account. The LBS data may include position information. Wherein, the LBS data may include an IP (Internet Protocol) address, a WifiMac (local area network physical, an identifier for recognizing a terminal in a local area network) address, GPS (Global Positioning System) information, base station information, and the like.

Then, the first acquisition sub-module 220 may obtain a historical transaction track of the account according to the position information, to form an account set. More specifically, the first acquisition sub-module 220 may associate the acquired position information in chronological order, to obtain a historical transaction track of the corresponding account; or sort the acquired position information first, for example, unify and sort out LBS data of different formats to eliminate unrecognizable data, obvious error data, and the like, and obtain the historical transaction track of the account according to the sorted position information.

The reconstruction sub-module 230 is configured to extract feature points from the historical transaction track, and obtain a reconstructed track of the account according to the feature points. Wherein, the feature point refers to a point, among end points of the historical transaction track, that meets a preset condition.

The point meeting the preset condition includes, for example: a stay point, and a point embodying a characteristic change of the historical transaction track.

The stay point refers to a point successively appearing at least twice at the same position in the historical transaction track. For example, after statistics on historical information, a position point corresponding to a moment T1 is P1, and a position point corresponding to a moment T2 adjacent to T1 is also PI; then, a point corresponding to P1 is referred to as a stay point.

The point embodying a characteristic change of the historical transaction track is, for example, a point embodying a position direction change of the historical transaction track, and specifically, the point may be represented by an angle between track segments included in the historical transaction track. For example, the historical transaction track includes a track segment formed by P1-P2, and a track segment formed by P2-P3. If an angle between the track segment formed by P1-P2 and the track segment formed by P2-P3 is greater than a preset angle, P2 may be determined as a point embodying a characteristic change of the historical transaction track. Specifically, as shown in FIG. 2, it may be obtained according to the position information that the historical transaction track is line segments formed by track points P1, P2, P3 and P4. Wherein, the x axis and the y axis in the coordinate system in FIG. 2 respectively represent position coordinates of each track point, and specifically, may refer to longitude or dimension respectively, or may represent a two-dimensional spatial distance, wherein the spatial distance may be obtained according to a longitude difference and a dimension difference between two points. A member A respectively appears at points P1, P2, P3 and P4 in chronological order. For example, the points such as P1 and P2 are a point corresponding to the home of the member A, a point corresponding to the office, a point corresponding to a supermarket, and the like, and track segments thereof are formed by tracks P1-P2, P2-P3 and P3-P4. Due to an overhigh LBS data collection frequency, the data may contain excessive redundant information, for example, the tracks P2-P3 and P3-P4 in FIG. 2. Therefore, feature points may be extracted from the historical transaction track, and the transaction track of the account may be reconstructed according to the feature points. For example, the tracks P2-P3 and P3-P4 are reconstructed to obtain a new track segment P2-P4, thus improving the running efficiency of subsequent track data mining with a slight loss of track precision.

Optionally, the reconstruction sub-module 230 extracts feature points from the historical transaction track, and includes:

the acquisition unit 231 configured to acquire a point embodying a characteristic change of the historical transaction track, and a stay point; and
the determination unit 232 configured to determine the point embodying a characteristic change of the historical transaction track and the stay point as the feature points, wherein, the stay point is a point successively appearing at least twice at the same position.

Wherein, the point embodying a characteristic change of the historical transaction track may be determined by an angle between track segments included in the historical transaction track.

For example, referring to FIG. 3, the key to track reconstruction is finding a point that embodies a characteristic change of the track, that is, the feature point, from the historical transaction track. A selection rule of the feature point may be set by an analyzer. In this embodiment, an angle between track segments is used to indicate the characteristic change of the historical transaction track. Further, when an angle between track segments is determined, for example, when an angle between a second track segment and a first track segment is determined, an accumulated angle may be employed. The accumulated angle refers to that angles between adjacent track segments between the first track segment and the second track segment are accumulated, and a point of which the accumulated angle is greater than a threshold is a feature point. Suppose that 25° is used as a threshold; in FIG. 3, an account A appears at P1, P2, P3, P4 and P5 respectively in chronological order, and track segments thereof include tracks P1-P2, P2-P3, P3-P4 and P4-P5. An angle between the track segments P1-P2 and P2-P3 is equal to 45°, which is greater than the set threshold, and therefore, P2 is a feature point. For P3, as an angle between P2-P3 and P3-P4 is 15°, which is less than the threshold, and therefore, P3 is not a feature point. For P4, as P3 is not a feature point, an accumulated angle between P4-P5 and P2-P3 rather than an angle between P3-P4 and P4-P5 is calculated during angle measurement. The accumulated angle is 15°+3°=18°, which does not reach the set threshold, and therefore, P4 is not a feature point either. During track reconstruction, by using the feature point P2, the track is divided into two new track segments: P1-P2, P2-P5.

It should be noted that, in the process of track reconstruction, the feature points may include a stay point, and the stay point may not be involved in the calculation of the track angle, to reduce the amount of computation. The stay point is a point successively appearing at least twice at the same position. For example, in FIG. 3, it is assumed that the point P4 is a stay point, and then, an accumulated angle corresponding to P4 will not be calculated as described above; instead, P4 is directly determined as a feature point. As P2 is also determined as a feature point through the above angle calculation, the track after reconstruction becomes P1-P2, P2-P4, P4-P4 (a stay track), and P4-P5. The stay point, as a special feature point, is key to information reflected in the track. For example, tracks of two accounts in Table 1 have opposite track directions according to the method illustrated in the figure; however, the two have a common stay point (X, Y), and therefore, as known from the stay point, the member A and the member B are related.

The clustering module 400 is configured to determine track segments included in the reconstructed track, and cluster the track segments to obtain at least one clustered category.

More specifically, first, the first calculation sub-module 410 is configured to calculate a vertical distance, a parallel distance, and an angular distance between every two track segments, and obtain a final distance according to the vertical distance, the parallel distance, and the angular distance. Generally, assuming that a track of an account A has N feature points after reconstruction, then the account A has N-1 track segments. To cluster the N-1 track segments to find a feature track segment set, distances, including a vertical distance, a parallel distance and an angular distance, between every two track segments may be calculated.

As shown in FIG. 6, Ps and Pe are projection points of a line segment $L_j$ on a line segment $L_i$. The final distance between the line segments may be obtained by weighting the vertical distance, the parallel distance and the angular distance: $d_{Final} = w_\neg*d_\neg + w_1*d_1 + w_\theta*d_\theta$, and weight values may be set by an analyzer, and may also be preset as 1. Moreover, a stay track segment is used as a special line segment, and a distance thereof is a point-to-line distance in the space, which may be obtained geometrically.

After the final distance between track segments is obtained, the clustering sub-module 420 is configured to cluster the track segments according to the final distance. The clustering sub-module 420 may cluster the N-1 track segments according to the final distance. The clustering may be implemented by a commonly used clustering algorithm.

The extraction module 500 is configured to extract a feature track from each category of the at least one category, to obtain a feature track set including at least one feature track. For instance, assuming that after track clustering, the N-1 track segments of the account A are clustered into M categories, then, a feature track may be extracted from each category, and therefore, M feature tracks in total form a feature track set representing M typical historical application tracks of the account A. The significance of extracting the feature track is the timeliness of online application: first, for each account, only feature tracks thereof need to be stored, while all scattered tracks are ignored, which greatly saves the storage space; secondly, finite feature tracks are stored for each account, thus greatly improving performance of online real-time calling and calculation.

In an embodiment of the present invention, the extraction module 500 may further extract, by line-sweeping track segments included in each category, a feature track from the corresponding category. Wherein, the feature track is a virtual point sequence plp2...pn, and these points may be determined by line-sweeping. Specifically, when a line sweeps vertically along a main axis direction of a line segment cluster, the number of line segments contacting the sweeping line is counted, and the data only changes when the sweeping line goes through a start or end point of a line segment. If the number is greater than or equal to a preset threshold (the threshold is, for example, 3), an average coordinate of line segments related to the main axis is calculated, and the average value is interpolated in the feature track to become a point in the feature track. Otherwise, the current point is skipped, for example, point 1 and point 6 in FIG. 7 are skipped. In addition, to smoothen the feature track, if two points are too close to each other, the two points may also be directly skipped, for example, point 4 in FIG. 7 is skipped. A red part 71 in FIG. 7 is an extracted feature track.

After the feature track set is obtained, the saving module 600 may save a corresponding relationship between each account and the feature track set. More specifically, the saving module 600 may establish a database, update the feature track set of each account in real time, and save the feature track set corresponding to each account.

The track mining process may be accomplished offline.

When a transaction is detected, the first determination module 100 may acquire a current transaction track of a current transaction account. For example, when the account A initiates a transaction, it may be determined that the current transaction account is the account A.

The positioning module 700 is configured to acquire LBS data of a current transaction and LBS data of a previous transaction of the current transaction account, and acquire, according to the LBS data, position information of the current transaction and position information of the previous transaction.

The second determination module 800 is configured to determine, according to the position information of the current transaction and the position information of the previous transaction, the current transaction track of the current transaction account.

The second calculation sub-module 310 is configured to calculate a spatial distance between the current transaction track and each feature track in the feature track set, and determine the minimum spatial distance as a distance value between the current transaction track and the feature track set. More specifically, the second calculation sub-module 310 may acquire, according to a pre-saved corresponding relationship between accounts and feature track sets, a pre-trained feature track set including M feature tracks of the account A. After the current transaction track and the feature track set are obtained, a spatial distance between the current transaction track and each feature track in the feature track set is calculated, and the minimum spatial distance is determined as a distance value between the current transaction track and the feature track set.

The first determination sub-module 320 is configured to determine a risk score of the current transaction account according to the distance value. More specifically, the first determination sub-module 320 may determine the distance value as the risk score of the current transaction account. For example, the risk score may be the calculated minimum distance, or an inverse (a value thereof being 0 to 1) of the minimum distance.

Or, a threshold range to which the distance value belongs is determined, a risk score corresponding to the threshold range to which the distance value belongs is determined according to a preset corresponding relationship between threshold ranges and risk scores, and the risk score is determined as the risk score of the current transaction account. For example, the corresponding relationship may be shown as the following formula:

$$\text{Current transaction risk score} = \begin{cases} 1 & \text{The minimum distance from the current transaction track to the feature track set} \geq 40 \text{ km} \\ 0.5 & \text{The minimum distance from the current transaction track to the feature track set} \in (3 \text{ km, } 40 \text{ km}) \\ 0 & \text{The minimum distance from the current transaction track to the feature track set} \leq 3 \text{km} \end{cases}$$

It should be understood that the risk score may be used as a direct standard of risk measurement, and may also be used as a value-added variable of any risk model, to improve the prediction accuracy of the common risk model.

This embodiment acquires, by collecting LBS data of a transaction account, a historical transaction track and a current transaction track of the account, reconstructs and clusters the historical transaction track to obtain a feature track set corresponding to the account, and then determines a risk score of a current transaction by calculating a spatial distance between the current transaction track and each feature track, thus implementing application of position information to risk management and control, and improving the accuracy of transaction risk detection. In addition, the historical transaction track is reconstructed and clustered, and redundant information is removed, thus saving the storage space, and effectively improving the data processing efficiency.

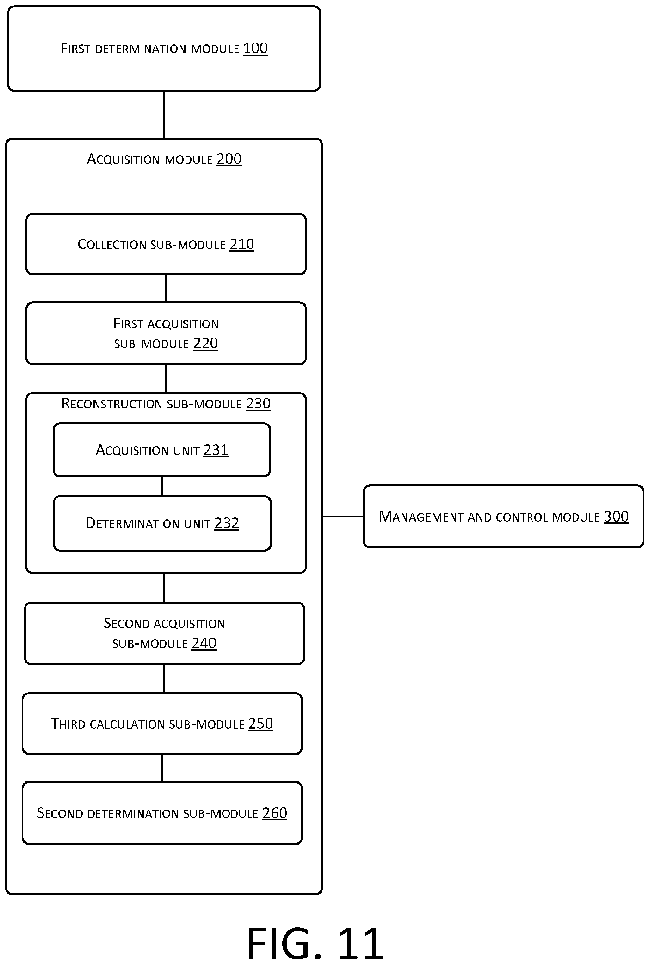

FIG. 11 is a schematic structural diagram of a transaction risk detection apparatus according to another embodiment of the present invention. This embodiment uses the current transaction account including at least two accounts as an example for illustration. This apparatus is applicable to a transaction involving at least two accounts, for example, a transaction of transfer to an account of Alipay™, or a mobile phone recharge service of Alipay™ (the mobile phone is bound to an Alipay™ account). The apparatus is divided into an offline training part and an online application part. In the offline training part, a track relationship score between accounts is obtained by calculating a temporal-spatial distance between a historical track of one account and a historical track of another account. A higher similarity degree between the historical tracks of the two account indicates a higher relationship score. In the online application part, during real-time judgment of whether a transaction involving two parties or multiple parties has a risk, a relationship score of accounts involved in the transaction is retrieved, and upon analysis, a higher score indicates a lower risk of the current transaction, and vice versa.

As shown in FIG. 11, the transaction risk detection apparatus includes: a first determination module 100, an acquisition module 200, a collection sub-module 210, a first acquisition sub-module 220, a reconstruction sub-module 230, an acquisition unit 231, a determination unit 232, a second acquisition sub-module 240, a third calculation sub-module 250, a second determination sub-module 260, and a management and control module 300. Wherein, the acquisition module 200 includes: the collection sub-module 210, the first acquisition sub-module 220, the reconstruction sub-module 230, the second acquisition sub-module 240, the third calculation sub-module 250, and the second determination sub-module 260; the reconstruction sub-module 230 includes: the acquisition unit 231 and the determination unit 232.

Specifically, the second acquisition sub-module 240 is configured to acquire, from the historical transaction track, reconstructed tracks respectively corresponding to the at least two accounts. More specifically, tracks after reconstruction include reconstructed tracks respectively corresponding to the at least two accounts. Specifically, for a transaction involving at least two accounts, such as the transaction of transfer to an account of Alipay™, or the mobile phone recharge service of Alipay™ (the mobile phone is bound to an Alipay™ account), the second acquisition sub-module 240 may acquire reconstructed tracks respectively corresponding to at least two accounts, and the third calculation sub-module 250 calculates a temporal-spatial distance between the reconstructed tracks respectively corresponding to the at least two accounts involved in the transaction. The temporal-spatial distance is generally calculated using the following three methods:

The first method is calculating a temporal distance and a spatial distance respectively, multiplying the temporal distance and the spatial distance by a certain weight, and then adding them to obtain the temporal-spatial distance.
The second method is filtering tracks by using time similarity, and then calculating a spatial distance between the tracks.
The third method is filtering tracks by using space similarity, and then calculating a temporal distance between the tracks.

The specific calculation method of the temporal-spatial distance may be implemented by using a commonly used temporal-spatial distance calculation algorithm.

It is understandable that, this embodiment uses calculating a temporal-spatial distance between every two tracks in the reconstructed tracks as an example, and optionally, after two accounts of the current transaction are determined, reconstructed tracks corresponding to the two accounts are acquired, and then a temporal-spatial distance between the reconstructed tracks corresponding to the two accounts is calculated.

The second determination sub-module 260 is configured to determine the temporal-spatial distance as the feature information, or, determine a similarity degree value between the at least two accounts according to the temporal-spatial distance, and determine the similarity degree value as the feature information. In an embodiment of the present application, a similarity degree value between at least two accounts may be an inverse of the temporal-spatial distance between the reconstructed tracks respectively corresponding to the at least two accounts, and the value is in a range of (0-1).

After a transaction is detected, the first determination module 100 determines two transaction parties of the current transaction account.

In this embodiment, a transaction between two accounts is used as an example.

For example, transfer from an account A to an account B is performed.

Then, a risk score is determined.

For example, a similarity degree value between the account A and the account B is acquired, and a risk score is calculated according to the similarity degree value.

It is understandable that, this embodiment uses calculating the similarity degree value as an example, and optionally, it is also possible that only the temporal-spatial distance is calculated, while the similarity degree value is not calculated, and the risk score is determined directly according to the temporal-spatial distance.

More specifically, the second determination module 300 may determine the temporal-spatial distance or the similarity degree value as the risk score of the current transaction account; or

determine a threshold range to which the temporal-spatial distance or similarity degree value belongs, determine, according to a preset corresponding relationship between threshold ranges and risk scores, a risk score corresponding to the threshold range to which the temporal-spatial distance or similarity degree value belongs, and determine the risk score as the risk score of the current transaction account. For example, the corresponding relationship may be shown as the following formula:

$$\text{Current transaction risk score} = \begin{cases} 1 & \text{The similarity degree between account tracks} < 0.2 \\ 0.5 & \text{The similarity degree between account tracks} \in [0.2, 0.8) \\ 0 & \text{The similarity degree between account tracks} \geq 0.8 \end{cases}$$

It should be understood that the risk score may be used as a direct standard of risk measurement, and may also be used as a value-added variable of any risk model, to improve the prediction accuracy of the common risk model.

This embodiment acquires a historical transaction track of an account by collecting LBS data of the account, reconstructs the historical transaction track, calculates, during transaction, a temporal-spatial distance between reconstructed tracks respectively corresponding to at least two accounts in the transaction, and then determines a risk score of the current transaction according to the temporal-spatial distance or a similarity degree value between the at least two accounts, thus implementing application of position information to risk management and control, and improving the accuracy of transaction risk detection. Meanwhile, a potential relationship between transaction accounts is mined according to feature information of accounts of two parties in the transaction, so that the probability of risk misjudgment is reduced.

It should be noted that, in the description of the present invention, terms "first" and "second" are merely used for the purpose of description, and cannot be interpreted as indicating or implying relative importance. Moreover, in the description of the present invention, "multiple" means two or more, unless otherwise specified.

Any process or method in the flowcharts or described herein in any other way may be construed as including one or more modules, segments or parts of executable instruction code for implementing particular logic functions or process steps. Moreover, the scope of preferred embodiments of the present invention includes other implementations, in which the function may be performed in an order different from what is depicted or discussed, including executing functions in a substantially simultaneous manner or an opposite order based on the related functions. This should be understood by those skilled in the art to which embodiments of the present invention belong.

It should be understood that each part of the present invention may be realized by hardware, software, firmware or a combination thereof. In the above embodiments, a plurality of steps or methods may be implemented by software or firmware stored in a memory and executed by an appropriate instruction execution system. For example, if it is implemented by hardware, like in another embodiment, the steps or methods may be implemented by any one of or a combination of the following techniques known in the art: a discrete logic circuit having a logic gate circuit for realizing a logic function of a data signal, an application-specific integrated circuit having an appropriate combination logic gate circuits, a programmable gate array (PGA), a field programmable gate array (FPGA), etc.

Those skilled in the art shall understand that all or some of the steps in the method of above embodiment may be achieved by a program instructing related hardware. The program may be stored in a computer readable storage medium, and the program, when being executed, includes one or a combination of the steps in the method embodiment.

In addition, the function units in the embodiments of the present invention may be integrated in a processing module, or these units may separately exist physically, or two or more units may be integrated in one module. The integrated module may be implemented in the form of hardware or in the form of a software function module. When the integrated module is implemented in the form of a software function module and is sold or used as a standalone product, the integrated module may also be stored in a computer readable storage medium.

The storage medium mentioned above may be a read-only memory, a magnetic disk, a CD, etc.

Reference throughout this specification to terms such as "an embodiment," "some embodiments," "an example," "a specific example," or "some examples" means that a specific feature, structure, material, or characteristic described in connection with such an embodiment or example is included in at least one embodiment or example of the present invention. The illustrative expression of these terms throughout this specification do not necessarily refer to a same embodiment or example. Furthermore, the described specific features, structures, materials, or characteristics may be combined in a suitable manner in any one or more embodiments or examples.

Although the embodiments of the present invention have been illustrated and described above, it would be appreciated that the above embodiments are exemplary and cannot be construed as limiting the present invention, and those skilled in the art may make changes, modifications, replacements and alternations to the above embodiments within the scope of the present invention.

**Claims**

1. A method comprising:

   determining an account (S101);
   determining a historical transaction track of the account according to historical location based service, LBS, data of the account, wherein the historical transaction track includes one or more line segments formed by position points corresponding to different time points;
   determining feature information (S102) of the historical transaction track of the account;
   determining a current transaction track of the account according to current LBS data of the account, wherein the current transaction track includes a line segment formed by position information of a previous transaction and position information of a current transaction; and
   comparing the current transaction track with the feature information of the historical transaction track to determine a risk of a current transaction associated with the account;
   performing risk management (S103) and control accordingly.

2. The method of claim 1, wherein the LBS data including position information.

3. The method of claim 1 or claim 2, wherein the acquiring the historical transaction track of the current transaction account includes:

   collecting the historical LBS data ;
   obtaining the historical transaction track according to the LBS data;
   extracting feature points from the historical transaction track; and
   obtaining a reconstructed track of the account according to the feature points.

4. The method of claim 3, further comprising:

   determining track segments included in the reconstructed track;
   clustering the track segments to obtain at least one clustered category;
   extracting a feature track from each category of the at least one category to obtain a feature track set including at least one feature track; and
   saving a corresponding relationship between the account and the feature track set.

5. The method of any preceding claim, wherein the determining the current transaction track of the account according to current LBS data of the account includes:

   acquiring the LBS data of the current transaction and LBS data of a previous transaction of the account;
   acquiring position information of the current transaction and position information of the previous transaction according to the LBS data of the current transaction and the LBS data of the previous transaction respectively; and determining, according to the position information of the current transaction and the position information of the previous transaction, the current transaction track of the current transaction account.

6. The method of any preceding claim, further comprising performing risk management and control according to the risk.

7. The method of any preceding claim, wherein:
the feature information is a feature track set corresponding to the historical transaction track of the account.

8. The method of claim 7, wherein the comparing the current transaction track with the feature information of the historical transaction track to determine the risk of the current transaction associated with the account includes:

calculating a spatial distance between the current transaction track and each feature track in the feature track set;
determining the minimum spatial distance as a distance value between the current transaction track and the feature track set; and
determining a risk score of the current transaction associated with the account.

9. The method of claim 8, wherein the determining the risk score of the current transaction of the current transaction associated with the account includes determining the distance value as a risk score of the current transaction associated with the account.

10. The method of claim 8, wherein the determining the risk score of the current transaction account according to the distance value includes:

determining a threshold range to which the distance value belongs;
determining, according to a preset corresponding relationship between threshold ranges and risk scores, a risk score corresponding to the threshold range to which the distance value belongs; and
determining the risk score as the risk score of the current transaction account.

11. A method comprising:

determining a first account and a second account;
determining a first transaction track of the first account according to first location based service, LBS, data of the first account, wherein the first transaction track includes one or more line segments formed by position points corresponding to different time points of the first account;
determining a second transaction track of the second account according to second location based service, LBS, data of the second account, wherein the second transaction track includes one or more line segments formed by position points corresponding to different time points of the second account; and
comparing the first transaction track and the second transaction track to determine a relationship between the first account and the second account;
performing risk management and control accordingly.

12. The method of claim 11, further comprising determining a risk of a transaction associated with the first account and the second account based on the relationship.

13. The method of claim 12, further comprising determining a threshold range for the similarity degree.

14. The method of any one of claims 11 to 13, further comprising:

using the similarity degree value as a risk score of a current transaction associated with the first account and the second account; and
performing risk management and control based on the risk score.

15. One or more memories stored thereon computer-readable instructions that, when executed by one or more processors, cause the one or more processors to perform acts comprising:

determining an account;
determining a historical transaction track of the account according to historical location based service, LBS, data of the account, wherein the historical transaction track includes one or more line segments formed by position points corresponding to different time points;
determining feature information of the historical transaction track of the account;
determining a current transaction track of the account according to current LBS data of the account, wherein the current transaction track includes a line segment formed by position information of a previous transaction and position information of a current transaction; and
comparing the current transaction track with the feature information of the historical transaction track to determine a risk of a current transaction associated with the account;
performing risk management and control accordingly.

**Patentansprüche**

1. Verfahren, umfassend:

   Bestimmen eines Kontos (S101);
   Bestimmen einer historischen Transaktionsspur des Kontos gemäß historischen standortbasierten Dienstdaten, LBS-Daten, des Kontos, wobei die historische Transaktionsspur eines oder mehrere Zeilensegmente einschließt, die durch Positionspunkte gebildet werden, die unterschiedlichen Zeitpunkten entsprechen;
   Bestimmen von Merkmalsinformationen (S102) der historischen Transaktionsspur des Kontos;
   Bestimmen einer derzeitigen Transaktionsspur des Kontos gemäß derzeitigen LBS-Daten des Kontos, wobei die derzeitige Transaktionsspur ein Zeilensegment einschließt, das aus Positionsinformationen einer vorherigen Transaktion und Positionsinformationen einer derzeitigen Transaktion gebildet wird; und
   Vergleichen der derzeitigen Transaktionsspur mit den Merkmalsinformationen der historischen Transaktionsspur, um ein Risiko einer derzeitigen Transaktion zu bestimmen, die dem Konto zugeordnet ist;
   Durchführen des Risikomanagements (S103) und -kontrolle dementsprechend.

2. Verfahren nach Anspruch 1, wobei die LBS-Daten Positionsinformationen einschließen.

3. Verfahren nach Anspruch 1 oder Anspruch 2, wobei das Erfassen der historischen Transaktionsspur des derzeitigen Transaktionskontos einschließt:

   Sammeln der historischen LBS-Daten;
   Erhalten der historischen Transaktionsspur gemäß den LBS-Daten;
   Extrahieren von Merkmalspunkten aus der historischen Transaktionsspur; und Erhalten einer rekonstruierten Spur des Kontos gemäß den Merkmalspunkten.

4. Verfahren nach Anspruch 3, weiter umfassend: Bestimmen der Spursegmente, die in der rekonstruierten Spur eingeschlossen sind;
   Clustering der Spursegmente, um mindestens eine Clusterkategorie zu erhalten;
   Extrahieren einer Merkmalsspur aus jeder Kategorie der mindestens einen Kategorie, um einen Merkmalsspursatz zu erhalten, der mindestens eine Merkmalsspur einschließt; und
   Speichern einer entsprechenden Beziehung zwischen dem Konto und dem Merkmalsspursatz.

5. Verfahren nach einem der vorstehenden Ansprüche, wobei das Bestimmen der derzeitigen Transaktionsspur des Kontos gemäß den derzeitigen LBS-Daten des Kontos einschließt:

   Erfassen der LBS-Daten der derzeitigen Transaktion und der LBS-Daten einer vorherigen Transaktion des Kontos;
   Erfassen von Positionsinformationen der derzeitigen Transaktion und Positionsinformationen der vorherigen Transaktion gemäß den LBS-Daten der derzeitigen Transaktion bzw. den LBS-Daten der vorherigen Transaktion; und
   Bestimmen der derzeitigen Transaktionsspur des derzeitigen Transaktionskontos gemäß den Positionsinformationen der derzeitigen Transaktion und den Positionsinformationen der vorherigen Transaktion.

6. Verfahren nach einem der vorstehenden Ansprüche, weiter umfassend das Durchführen eines Risikomanagements und -kontrolle gemäß dem Risiko.

**7.** Verfahren nach einem der vorstehenden Ansprüche, wobei:
die Merkmalsinformationen ein Merkmalsspursatz sind, welcher der historischen Transaktionsspur des Kontos entspricht.

**8.** Verfahren nach Anspruch 7, wobei das Vergleichen der derzeitigen Transaktionsspur mit den Merkmalsinformationen der historischen Transaktionsspur zum Bestimmen des Risikos der derzeitigen Transaktion, die dem Konto zugeordnet ist, einschließt:

Berechnen einer räumlichen Entfernung zwischen der derzeitigen Transaktionsspur und jeder Merkmalsspur in dem Merkmalsspursatz;
Bestimmen der minimalen räumlichen Entfernung als einen Entfernungswert zwischen der derzeitigen Transaktionsspur und dem Merkmalsspursatz; und
Bestimmen einer Risikobewertung der derzeitigen Transaktion, die dem Konto zugeordnet ist.

**9.** Verfahren nach Anspruch 8, wobei das Bestimmen der Risikobewertung der derzeitigen Transaktion der derzeitigen Transaktion, die dem Konto zugeordnet ist, das Bestimmen des Entfernungswerts als eine Risikobewertung der derzeitigen Transaktion, die dem Konto zugeordnet ist, einschließt.

**10.** Verfahren nach Anspruch 8, wobei das Bestimmen der Risikobewertung des derzeitigen Transaktionskontos gemäß dem Entfernungswert einschließt:

Bestimmen eines Schwellenbereichs, zu dem der Entfernungswert gehört;
Bestimmen, gemäß einer voreingestellten entsprechenden Beziehung zwischen Schwellenwerten und Risikobewertungen, einer Risikobewertung entsprechend dem Schwellenwertbereich, zu dem der Entfernungswert gehört; und
Bestimmen der Risikobewertung als die Risikobewertung des derzeitigen Transaktionskontos.

**11.** Verfahren, umfassend:

Bestimmen eines ersten Kontos und eines zweiten Kontos;
Bestimmen einer ersten Transaktionsspur des ersten Kontos gemäß ersten standortbasierten Dienstdaten, LBS-Daten, des ersten Kontos, wobei die erste historische Transaktionsspur eines oder mehrere Zeilensegmente einschließt, die durch Positionspunkte gebildet werden, die unterschiedlichen Zeitpunkten des ersten Kontos entsprechen;
Bestimmen einer zweiten historischen Transaktionsspur des zweiten Kontos gemäß zweiten standortbasierten Dienstdaten, LBS-Daten, des zweiten Kontos, wobei die zweite Transaktionsspur eines oder mehrere Zeilensegmente einschließt, die durch Positionspunkte gebildet werden, die unterschiedlichen Zeitpunkten des zweiten Kontos entsprechen; und
Vergleichen der ersten Transaktionsspur mit der zweiten Transaktionsspur, um eine Beziehung zwischen dem ersten Konto und dem zweiten Konto zu bestimmen; Durchführen von Risikomanagement und -kontrolle dementsprechend.

**12.** Verfahren nach Anspruch 11, weiter umfassend das Bestimmen eines Risikos einer Transaktion, die dem ersten Konto und dem zweiten Konto zugeordnet ist, basierend auf der Beziehung.

**13.** Verfahren nach Anspruch 12, weiter umfassend das Bestimmen eines Schwellenwertbereichs für den Ähnlichkeitsgrad.

**14.** Verfahren nach einem der Ansprüche 11 bis 13, weiter umfassend:

Verwenden des Ähnlichkeitsgradwerts als eine Risikobewertung einer derzeitigen Transaktion, die dem ersten Konto und dem zweiten Konto zugeordnet ist; und
Durchführen von Risikomanagement und -kontrolle basierend auf der Risikobewertung.

**15.** Einer oder mehrere Speicher, auf denen computerlesbare Anweisungen gespeichert sind, die, wenn sie von einem oder mehreren Prozessoren ausgeführt werden, den einen oder die mehreren Prozessoren veranlassen, Aktionen durchzuführen, die umfassen:

Bestimmen eines Kontos;
Bestimmen einer historischen Transaktionsspur des Kontos gemäß historischen standortbasierten Dienstdaten, LBS-Daten, des Kontos, wobei die historische Transaktionsspur eines oder mehrere Zeilensegmente einschließt, die durch Positionspunkte gebildet werden, die unterschiedlichen Zeitpunkten entsprechen;
Bestimmen von Merkmalsinformationen der historischen Transaktionsspur des Kontos;
Bestimmen einer derzeitigen Transaktionsspur des Kontos gemäß derzeitigen LBS-Daten des Kontos, wobei die derzeitige Transaktionsspur ein Zeilensegment einschließt, das aus Positionsinformationen einer vorherigen Transaktion und Positionsinformationen einer derzeitigen Transaktion gebildet wird; und
Vergleichen der derzeitigen Transaktionsspur mit den Merkmalsinformationen der historischen Transaktionsspur, um ein Risiko einer derzeitigen Transaktion zu bestimmen, die dem Konto zugeordnet ist;
Durchführen des Risikomanagements und -kontrolle dementsprechend.

## Revendications

**1.** Procédé comprenant :

la détermination d'un compte (S101) ;
la détermination d'un suivi de transaction historique du compte en fonction de données historiques de services basés sur la localisation, LBS, du compte, dans lequel le suivi de transaction historique inclut un ou plusieurs segments de ligne formés par des points de position correspondant à différents points temporels ;
la détermination d'informations de caractéristiques (S102) du suivi de transaction historique du compte ;
la détermination d'un suivi de transaction actuel du compte en fonction de données LBS actuelles du compte, dans lequel le suivi de transaction actuel inclut un segment de ligne formé par des informations de position d'une transaction précédente et des informations de position d'une transaction actuelle ; et
la comparaison du suivi de transaction actuel avec les informations de caractéristiques du suivi de transaction historique pour déterminer un risque d'une transaction actuelle associée au compte ;
l'exécution d'une gestion de risque (S103) et d'un contrôle en conséquence.

**2.** Procédé selon la revendication 1, dans lequel les données LBS incluent des informations de position.

**3.** Procédé selon la revendication 1 ou la revendication 2, dans lequel l'acquisition du suivi de transaction historique du compte de transaction actuel inclut :

la collecte des données LBS historiques ;
l'obtention du suivi de transaction historique en fonction des données LBS ;
l'extraction de points de caractéristique à partir du suivi de transaction historique ; et
l'obtention d'un suivi reconstruit du compte en fonction des points de caractéristique.

**4.** Procédé selon la revendication 3, comprenant en outre :

la détermination de segments de suivi inclus dans le suivi reconstruit ;
le regroupement des segments de suivi pour obtenir au moins une catégorie regroupée ;
l'extraction d'un suivi de caractéristique à partir de chaque catégorie de l'au moins une catégorie pour obtenir un ensemble de suivis de caractéristique incluant au moins un suivi de caractéristique ; et
la sauvegarde d'une relation correspondante entre le compte et l'ensemble de suivis de caractéristique.

**5.** Procédé selon une quelconque revendication précédente, dans lequel la détermination du suivi de transaction actuel du compte en fonction de données LBS actuelles du compte inclut :

l'acquisition de données LBS de la transaction actuelle et de données LBS d'une transaction précédente du compte ;
l'acquisition d'informations de position de la transaction actuelle et d'informations de position de la transaction précédente respectivement en fonction des données LBS de la transaction actuelle et des données LBS de la transaction précédente ; et
la détermination, en fonction des informations de position de la transaction actuelle et des informations de position de la transaction précédente, du suivi de transaction actuel du compte de transaction actuel.

**6.** Procédé selon une quelconque revendication précédente, comprenant en outre l'exécution d'une gestion de risque et d'un contrôle en fonction du risque.

**7.** Procédé selon une quelconque revendication précédente, dans lequel :
les informations de caractéristique sont un ensemble de suivis de caractéristique correspondant au suivi de transaction historique du compte.

**8.** Procédé selon la revendication 7, dans lequel la comparaison du suivi de transaction actuel avec les informations de caractéristique du suivi de transaction historique pour déterminer le risque de la transaction actuelle associée au compte inclut :

le calcul d'une distance spatiale entre le suivi de transaction actuel et chaque suivi de caractéristique dans l'ensemble de suivis de caractéristique ;
la détermination de la distance spatiale minimale comme une valeur de distance entre le suivi de transaction actuel et l'ensemble de suivis de caractéristique ; et
la détermination d'une note de risque de la transaction actuelle associée au compte.

**9.** Procédé selon la revendication 8, dans lequel la détermination de la note de risque de la transaction actuelle de la transaction actuelle associée au compte inclut la détermination de la valeur de distance comme une note de risque de la transaction actuelle associée au compte.

**10.** Procédé selon la revendication 8, dans lequel la détermination de la note de risque de la transaction actuelle en fonction de la valeur de distance inclut :

la détermination d'une plage de seuil à laquelle la valeur de distance appartient ;
la détermination, en fonction d'une relation correspondante prédéfinie entre des plages de seuil et des notes de risque, d'une note de risque correspondant à la plage de seuil à laquelle la valeur de distance appartient ; et
la détermination de la note de risque comme la note de risque du compte de transaction actuel.

**11.** Procédé comprenant :

la détermination d'un premier compte et d'un second compte ;
la détermination d'un premier suivi de transaction du premier compte en fonction de premières données de services basés sur la localisation, LBS, du premier compte, dans lequel le premier suivi de transaction inclut un ou plusieurs segments de ligne formés par des points de position correspondant à différents points temporels du premier compte ;
la détermination d'un second suivi de transaction du second compte en fonction de secondes données de services basés sur la localisation, LBS, du second compte, dans lequel le second suivi de transaction inclut un ou plusieurs segments de ligne formés par des points de position correspondant à différents points temporels du second compte ; et
la comparaison du premier suivi de transaction et du second suivi de transaction pour déterminer un relation entre le premier compte et le second compte ;
l'exécution d'une gestion de risque et d'un contrôle en conséquence.

**12.** Procédé selon la revendication 11, comprenant en outre la détermination d'un risque d'une transaction associée au premier compte et au second compte sur la base de la relation.

**13.** Procédé selon la revendication 12, comprenant en outre la détermination d'une plage de seuil pour le degré de similitude.

**14.** Procédé selon l'une quelconque des revendications 11 à 13, comprenant en outre :

l'utilisation de la valeur de degré de similitude comme une note de risque pour une transaction actuelle associé au premier compte et au second compte ; et
l'exécution d'une gestion de risque et d'un contrôle sur la base de le note de risque.

**15.** Une ou plusieurs mémoires ayant stockées dessus des instructions lisibles par ordinateur qui, quand elles sont exécutées par un ou plusieurs processeurs, amènent les un ou plusieurs processeurs à effectuer des actions comprenant :

la détermination d'un compte ;

la détermination d'un suivi de transaction historique du compte en fonction de données historiques de services basés sur la localisation, LBS, du compte, dans lequel le suivi de transaction historique inclut un ou plusieurs segments de ligne formés par des points de position correspondant à différents points temporels ;

la détermination d'informations de caractéristiques du suivi de transaction historique du compte ;

la détermination d'un suivi de transaction actuel du compte en fonction de données LBS actuelles du compte, dans lequel le suivi de transaction actuel inclut un segment de ligne formé par des informations de position d'une transaction précédente et des informations de position d'une transaction actuelle ; et

la comparaison du suivi de transaction actuel avec les informations de caractéristiques du suivi de transaction historique pour déterminer un risque d'une transaction actuelle associée au compte ;

l'exécution d'une gestion de risque et d'un contrôle en conséquence.

DETERMINE CURRENT TRANSACTION ACCOUNT, AND ACQUIRE HISTORICAL TRANSACTION TRACK OF CURRENT TRANSACTION ACCOUNT, HISTORICAL TRANSACTION TRACK BEING DETERMINED ACCORDING TO LBS DATA OF CURRENT TRANSACTION ACCOUNT
S101

ACQUIRING FEATURE INFORMATION OF CURRENT TRANSACTION ACCOUNT ACCORDING TO HISTORICAL TRANSACTION TRACK OF CURRENT TRANSACTION ACCOUNT
S102

PERFORM RISK MANAGEMENT AND CONTROL ACCORDING TO FEATURE INFORMATION
S103

# FIG. 1

FIG. 2

FIG. 3

| WifiMac data | Base station data |
| IP data | GPS data |

Collection and sorting-out of original data — Data layer — 41

Data sorting-out

Use related algorithm and strategy to accomplish complex calculation in large dataset

Reconstruction and division of track

Track similarity measurement

Track data mining

Logic layer — 42

Data mining and knowledge discovery

Pattern discovery and visualization

Application layer — 43

# FIG. 4

Offline training

Online application

S201 — Account set

S202 — Track reconstruction

S203 — Track segment clustering

S204 — Extraction of feature track set

Transaction

S205 — Current transaction track

S206 — Calculation of distance to feature track

S207 — Risk score

# FIG. 5

FIG. 6

EP 3 242 236 B1

FIG. 7

S301　　　　　　S302　　　　　　S303　　　　　　S304

| Account set | → | Track reconstruction | → | Calculation of temporal-spatial distance between tracks | → | Similarity degree between account tracks |

Offline training

- - - - - - - - - - - - - - - - - - - - - - - - - - - - - - - - - - - - - - - -

Online application

| Transaction | → | Two parties in transaction | → | Risk score |

S305　　　　　　S306

# FIG. 8

FIRST DETERMINATION MODULE
100

ACQUISITION MODULE
200

MANAGEMENT AND CONTROL MODULE
300

# FIG. 9

FIRST DETERMINATION MODULE
100

CLUSTERING MODULE 400

FIRST CALCULATION
SUB-MODULE 410

CLUSTERING SUB-
MODULE 420

ACQUISITION MODULE 200

COLLECTION SUB-MODULE
210

FIRST ACQUISITION
SUB-MODULE 220

RECONSTRUCTION SUB-
MODULE 230

ACQUISITION UNIT
231

DETERMINATION UNIT
232

POSITIONING MODULE
700

SECOND DETERMINATION
MODULE 800

EXTRACTION MODULE 500

SAVING MODULE 600

MANAGEMENT AND CONTROL
MODULE 300

SECOND CALCULATION
SUB-MODULE 310

FIRST DETERMINATION
SUB-MODULE 320

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013218765 A

- US 2013110715 A